(19) Europäisches Patentamt
European Patent Office
Office européen des brevets

(11) **EP 1 611 758 B1**

(12) **EUROPEAN PATENT SPECIFICATION**

(45) Date of publication and mention
of the grant of the patent:
**07.05.2008 Bulletin 2008/19**

(51) Int Cl.:
*H04Q 7/36* (2006.01)

(21) Application number: **04741423.0**

(22) Date of filing: **03.03.2004**

(86) International application number:
**PCT/EP2004/050245**

(87) International publication number:
**WO 2004/086795 (07.10.2004 Gazette 2004/41)**

(54) **METHOD FOR DETERMINING A COVERAGE AREA IN A CELL-BASED COMMUNICATION SYSTEM**

VERFAHREN ZUR BESTIMMUNG EINES ABDECKUNGSGEBIETS IN EINEM AUF ZELLEN BASIERENDEN KOMMUNIKATIONSSYSTEM

PROCEDE DE DETERMINATION D'UNE ZONE DE COUVERTURE DANS UN SYSTEME DE COMMUNICATION A BASE CELLULAIRE

(84) Designated Contracting States:
**AT BE BG CH CY CZ DE DK EE ES FI FR GR HU IE IT LI LU MC NL PL PT RO SE SI SK TR**

(30) Priority: **28.03.2003 GB 0307153**

(43) Date of publication of application:
**04.01.2006 Bulletin 2006/01**

(73) Proprietor: **MOTOROLA, INC.**
**Schaumburg, IL 60196 (US)**

(72) Inventors:
• **STEPHENS, Paul**
**Groundwell,**
**Swindon Wiltshire SN25 4XY (GB)**
• **HOPKINSON, Jonathan**
**Groundwell,**
**Swindon Wiltshire SN25 4XY (GB)**

• **BRUSCH, Simon**
**Groundwell,**
**Swindon Wiltshire SN25 4XY (GB)**

(74) Representative: **Jepsen, René Pihl et al**
**Eltima Consulting**
**Grove House, Lutyens Close'**
**Chineham Court**
**Basingstoke, Hants RG24 8AG (GB)**

(56) References cited:
**EP-A- 0 431 956          GB-A- 2 356 320**

• **ICHITSUBO S ET AL: "MICROCELL AUTOMATIC PROPAGATION MEASURING SYSTEM AND SERVICE-AREA EVALUATION" WIRELESS PERSONAL COMMUNICATIONS, KLUWER ACADEMIC PUBLISHERS, NL, vol. 7, no. 1, 1 May 1998 (1998-05-01), pages 41-49, XP000750751 ISSN: 0929-6212**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the Invention

This invention relates to determining the coverage of a cell in a cell-based communication system. The invention is applicable to, but not limited to, utilising such coverage information to assist alarm prioritisation due to cell outage and/or re-configure a system's or cell's operational parameters to minimise the degree of overlapping coverage, thereby allowing higher capacity/quality frequency plans to be deployed.

Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs).

In a wireless communication system, each BTS has associated with it a particular geographical coverage area (or cell). Primarily, a particular transmitter power level defines a coverage area where a BTS can maintain acceptable communications with MSs operating within its serving cell. In addition, receiver sensitivity performance of receiving wireless communication units also affects a given coverage area. In large cellular communication systems, these cells are combined and often overlapped to produce an extensive coverage area.

Wireless communication systems are distinguished over fixed communication systems, such as the public switched telephone network (PSTN), principally in that mobile stations move between coverage areas served by different BTS (and/or different service providers) and, in doing so, encounter varying radio propagation environments.

In a cellular system, adjacent cells are typically configured to overlap, to ensure a contiguous signal coverage area. The cell overlap region is deliberately designed into the system plan to ensure that mobile stations can successfully handover between cells. The degree of coverage overlap between cells can vary enormously. In such systems it is desirable to have an accurate measure of unique cell coverage (and ideally cell overlap) to operate and maintain the network more effectively (i.e. maximising capacity and quality of service).

A system design based on cells is typically based on an ideal cell pattern. However, an idealised cell pattern never occurs in practice, due to the nature of the terrain and the fact that cell sites and antennae are not ideally located on a regular grid pattern. The network designer therefore uses frequency planning tools to estimate the radio propagation for each cell and predict a corresponding coverage area. Based on these propagation models, the network designer is able to develop a frequency plan for the network intended to minimise the expected interference. The frequency plan considers such factors as antenna heights and location, terrain topology, transmitted power levels and the anticipated number of subscribers.

By collating predicted coverage area information for a number of cells, it is possible to determine a degree of coverage overlap between a number of respective cells. However, the accuracy of these tools is limited, since they 'predict' the theoretical coverage rather than measure the actual coverage supported by a particular BTS.

The quality of a frequency plan that can be produced by such coverage prediction techniques is constrained by the degree of coverage overlap between cells. Greater overlap means greater potential interference, making it more difficult to produce a low interference frequency plan. A traditional method of allocating frequencies in a wireless cellular system is to employ a channel allocation algorithm in conjunction with a carrier-to-interference (C/I) matrix, where the C/I matrix may use measurement report data.

Achieving an optimum frequency plan is therefore dependent on the C/I matrix accuracy, and it is inaccuracies in these matrices that ultimately lead to unexpected interference. There are a number of reasons why traditionally produced matrices are inaccurate. For example, the matrices are based on predicted interference levels at ground level, i.e. subscribers in high buildings are not considered. They assume fixed cell boundaries whereas the characteristics of MSs and handover algorithms are such that cell boundaries can move. Also, they are reliant on accurate site and antenna data. This data can be far from accurate with some Operators having no clear idea of where their sites are, let alone being confident in the bore angles of the antennas. They do not reflect the impact of detailed clutter data, such as street canyons.

Furthermore, these coverage prediction techniques tend to focus on geographic coverage area, assuming an even distribution of MSs within the cell, rather than subscriber-based coverage where subscribers are unevenly distributed across a cell. This inaccuracy limits the effectiveness of the predictions and the resulting decisions made therefrom. This, in turn, means that the network is sub-optimally configured and therefore typically delivers a sub-optimal quality of service.

The inventors of the present invention have therefore both recognised and appreciated that there is currently no accurate method of determining an accurate cell-based coverage map, particularly when there exists coverage overlap between cells.

An example of a cellular communication system wherein the radio coverage of a geographic area is evaluated from transmissions from mobile units is is described in European Patent Application publication EP-A-0 431 956.

In the context of network optimisation, it is known that measurement reports are collected from an operational network, as described in co-pending UK Patent Application GB 2356320 having the same Applicant as the present invention. The data collected is then analysed to generate neighbour cell list for handover purposes and facilitate power control decisions. In this regard, it is known that MSs scan signal transmissions from multiple BTSs and report the signal levels of these in the measurement reports. The scanning process, which is used to generate the measurement reports, enables the MS (or its serving BTS) to determine optimal handover candidates, namely the BTS offering the highest quality signal/communication link to the respective MS.

Thus, there exists a need in the field of the present invention to provide a cell-based communication system and method for determining coverage overlap in a cell-based communication system, wherein the aforementioned disadvantages may be alleviated.

Statement of Invention

In accordance with a first aspect of the present invention there is provided a method of determining coverage in a cellular communication system, as claimed in Claim 1.

In accordance with a second aspect of the present invention, there is provided a storage medium, as claimed in Claim 10.

In accordance with a third aspect of the present invention, there is provided a communication system, as claimed in Claim 11.

In accordance with a fourth aspect of the present invention, there is provided a communication unit, as claimed in Claim 12.

In summary, the inventive concepts of the present invention propose a mechanism for using measurement reports (MRs) to determine the unique coverage and the potential interfering (overlapping) coverage generated by each cell, preferably determined in terms of Erlangs. By utilising MRs in this manner, the Network Operator is able to direct and prioritise both automatic and manual maintenance and optimisation activities, for example, alarm prioritisation to distinguish the more critical coverage cells. Alternatively, or in addition, the coverage calculations, according to the preferred embodiment of the present invention, may be used to reconfigure a system's operational parameters, such as: transmit power, a beam-forming antenna tilt or direction, and even turning off cell sites whose excessive coverage overlap provides unacceptable interference or severely restricts the frequency allocation process.

Brief Description of the Drawings

Exemplary embodiments of the present invention will now be described, with reference to the accompanying drawings, in which:

FIG. 1 illustrates a block diagram of a cellular radio communications system adapted to support the various inventive concepts of a preferred embodiment of the present invention;

FIG. 2 illustrates a cell-based communication system adapted to support the various inventive concepts of a preferred embodiment of the present invention; and

FIG. 3 illustrates a flowchart of a method of determining an overlapping coverage area, and thereafter utilising such information, in accordance with a preferred embodiment of the present invention.

Description of Preferred Embodiments

The inventive concepts of the present invention propose a mechanism for using measurement reports (MRs) to determine both the unique and overlapping (and therefore interfering) coverage generated by each cell. In particular, three aspects of a respective cell's coverage may be determined:

(i) The amount of traffic that receives coverage uniquely from this cell;
(ii) The amount of traffic that receives coverage from this cell, but which could also obtain coverage from an adjacent cell; and
(iii) The amount of traffic carried by adjacent cells that could provide coverage to this cell.

From a perspective of a serving cell, at one extreme, it is known that the coverage area of the cell may be completely overlapped by one or more adjacent cells. At the other extreme, the coverage area of two cells may be configured to not overlap at all. This variation has significant implications for system operation. For example, if a cell goes off-air, then subscriber units in the area uniquely covered by this cell will no longer have service. However, if there is a large degree of overlap from neighbouring cells, then many subscriber units will be able to receive service from neighbouring, but less-preferred, cells. Conversely, with no overlap, all subscriber units will lose service.

Hence, in accordance with a preferred embodiment of the present invention, a mechanism to determine an accurate knowledge of coverage overlap is proposed. Once an accurate knowledge of coverage overlap has been determined the relative importance of keeping various cells on air can be identified.

The inventors of the present invention have appreciated that those cells providing the most unique coverage are the most critical to be maintained. Therefore, for example in a first embodiment of the present invention, the resulting cell outage alarm should be set to reflect the uniqueness and importance of the cell. Furthermore, in a second embodiment of the present invention, such knowledge also helps determine network availability as well as enabling a Network Operator to set optimum system parameters. Furthermore, such knowledge enables higher capacity and better quality frequency plans to be deployed.

From a perspective of a neighbouring, overlapping cell, at one extreme, the cell may overlap with many neighbouring cells. Alternatively, the cell may overlap with no other cells. This variation impacts frequency planning, since the frequencies assigned to a cell with large overlap cannot be re-used in the overlapped cells, making frequency planning more difficult. However, a cell with a large overlap may be useful for providing continuity of service, should the overlapped cells go out of service or become congested.

The inventive concepts of the present invention alleviate the aforementioned problems associated with the coverage prediction by extending the concept of an Intelligent Optimisation Service (IOS), as described later. In particular, the present invention proposes a mechanism of using existing measurement reports to assist in determining a level of coverage overlap. Furthermore, once such measurement reports.have been received and processed and coverage overlap information has been calculated, the information can be used in a variety of ways, as detailed later.

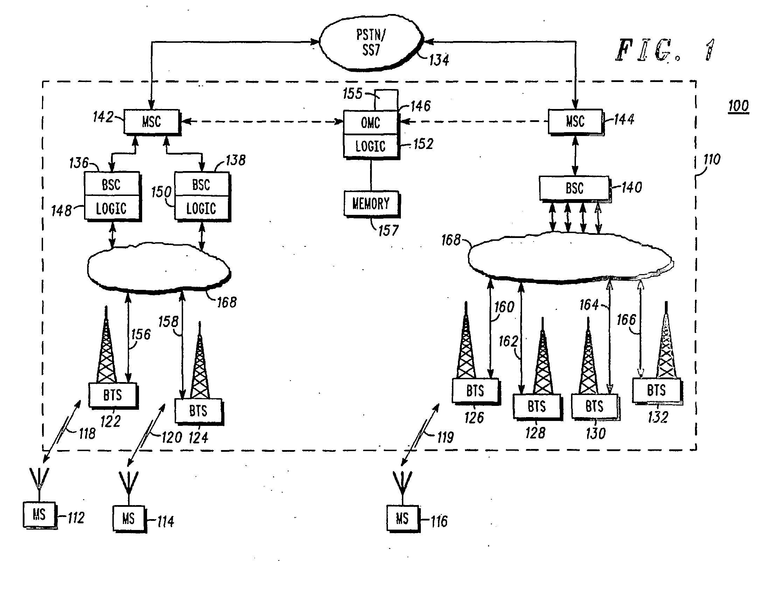

Referring first to FIG. 1, a cellular telephone communication system 100 is shown, in outline, supporting a Global System for Mobile communication (GSM) air-interface, in accordance with a preferred embodiment of the invention. The European Telecommunications Standards Institute (ETSI) has defined the GSM air-interface.

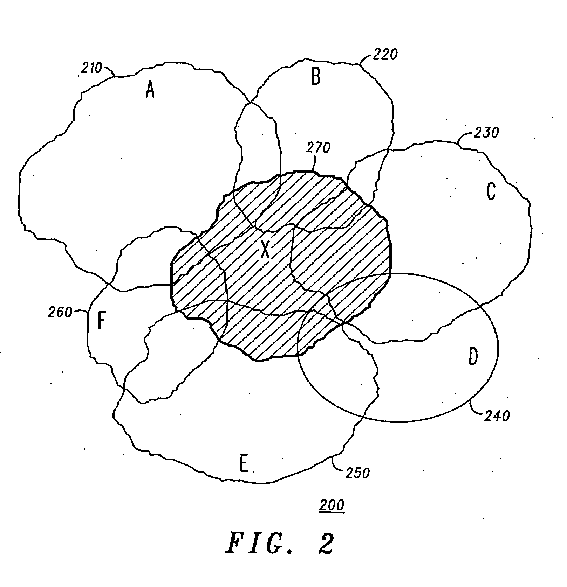

Generally, the air-interface protocol is administered from base transceiver sites, within the network architecture 110, that are geographically spaced apart - one base site supporting a cell (or, for example, sectors of a cell), as shown in FIG. 2.

A plurality of subscriber units 112-116 communicate over the selected air-interface 118-120 with a plurality of base transceiver stations (BTS) 122-132. A limited number of MSs 112-116 and BTSs 122-132 are shown for clarity purposes only. The BTSs 122-132 may be connected to a conventional public-switched telephone network (PSTN) 134 through base site controllers (BSCs) 136-140 and mobile switching centres (MSCs) 142-144.

Each BTS 122-132 is principally designed to serve its primary cell, with each BTS 122-132 containing one or more transceiver units and communicating 156-166 with the rest of the cellular system infrastructure

Each BSC 136-140 may control one or more BTSs 122-132, with BSCs 136-140 generally interconnected through MSCs 142-144. Processes within the MSCs are provided to account for the situation where a MS (1.12-116) passes between two BTS serving areas, for example MS 112 moving from an area covered by BTS 122 to an area covered by BTS 124, where the two BTSs are,controlled by different BSCs (BSC 136 and BSC 138 in this example).

Similar processes are supported in MSCs to account for the situation where an MS moves between serving BTSs where these BTSs are connected to different MSCs. These mechanisms therefore allow the cellular telephone communication system to support handover of MSs 112-116 between overlapping cells in a contiguous, seamless manner.

Each MSC 142-144 provides a gateway to the PSTN 134, with, MSCs 142-144 interconnected through an operations and management centre (ONIC) 146 that administers general control of the cellular telephone communication system 100, as will be understood by those skilled in the art.

The various system elements, such as BSCs 136-138 and OMC 146, include control logic 148, 150, 152, with the various system elements usually having an associated memory function 157 (shown only in relation to OMC 146 for the sake of clarity). A memory function 157 of the OMC 146 typically stores historically compiled operational data as well as in-call data, system information such as neighbouring cell-site lists and control algorithms such as a list of frequencies to be scanned by the respective MSs.

In accordance with the preferred embodiment of the present invention, the OMC or an optimisation function adjunct to the OMC 146 receives Measurement Reports (MR) collected from respective cells, either from, say, serving BTSs and/or served MSs. In the context of the present invention, it is envisaged that an OMC's handling of MRs may be complemented or replaced by any such adjunct optimisation function. As such, the following description of the OMC's functionality in this regard encompasses any such suitable configuration. Notably, the OMC 146 has been adapted to include an overlapping coverage calculation function 155. The overlapping coverage calculation function 155 utilises the MR data to determine those cells that provide a unique coverage to MSs within those cells. The overlapping coverage calculation function 155 also utilises the MR data to determine those cells where some coverage can be supported by neighbouring cells.

In this regard, the OMC is able to calculate an amount of overlapping coverage. The OMC 146 has been configured to receive any operational/ environmental data provided by the system elements or UEs relating to the operational characteristics of the respective cells, in order to determine, for example, a level of unique coverage that respective cells provide.

In a further enhanced embodiment of the present invention, one or more BSCs 136 and/or one or more BTSs 122 may include, or be operably coupled to, an MR agent (not shown). The BSC 136 or BTS 122 preferably configures the agent to seek out and record measurements for the requisite environmental or operational data that may affect the overlapping coverage area of the cell.

It is also envisaged that the cell's MR information may be sent from any number of sources and include any useful data. In particular, the information may include:

(i) Cell statistical information, available at the OMC, such as Congestion, Blocking, Mean-Hold Time (MHT), Handover (HO) Cause distribution;
(ii) Measurement Reports, which indicate the Radio Frequency (RF) environment of the subscriber units; or
(iii) Control Signalling behaviour. This information is readily available to the OMC function in existing systems. It forms the basis of reports generated for the Network Operator to analyse during the course of normal operational activities.

In particular, if a MR from a MS contains no neighbouring BTS measurements, or only very weak neighbour measurements, it can be assumed that the MS could not achieve service from any neighbouring cell. This information is particularly useful to the OMC 146, should that serving cell go off-air or become congested.

Conversely, if the MR contains one or more neighbour measurements indicating a strong received signal, then it can be assumed that the MS could obtain service from one of these neighbours, if its serving cell becomes unavailable. Thus, by analysing all the MRs collected from a particular cell, it is possible to determine, for example, a proportion of the cell's traffic that depends solely on that cell for service. In this context, the OMC 146 is able to determine an unique coverage factor for that cell (UCF), where:

$$UCF = \frac{\text{Sum of MRs with no/weak neighbours}}{\text{Total Sum of MRs}} \quad [1]$$

In the context of the present invention, a weak neighbour is defined, for example, as a neighbour reported with a received signal level (RXLEV) of < 'X', where 'X' can be set by the Network Operator, for example, set at an RXLEV of '10' (equivalent to, say, -100dBm).

In the enhanced embodiment of the present invention, the OMC 146 comprises an overlapping coverage calculation function 155 to generate/calculate a subscriber-based coverage map that particularly indicates coverage overlap.

Preferably, the calculation to determine the degree of overlapping coverage is based on the number of times that a cell is reported as a neighbouring cell, by subscriber units in the other network cells. Indeed, in accordance with the preferred embodiment of the present invention, this information can easily be extracted from existing measurement report information. In this regard, a carrier-to-interference (C/I) matrix of rows and columns is produced, where each column represents the potential interference generated by a specific cell.

A simplified example of such a matrix is illustrated below in Table 1. The rows represent the cells 'A'-'D' as serving cells, and the columns represent cells 'A'-'D' as interfering cells. For example, cell 'B' can expect to lose six Erlangs of traffic due to interference, if it has the same frequency as cell 'C'. Hence, the amount of coverage overlap generated by each cell, which could potentially lead to interference, is represented by the total of the column for the respective cell. Thus, in this example, Cell 'B' has the highest overlap with forty Erlangs of traffic seen in other cells at a strong level.

Table 1:

|   | A | B | C | D |
|---|---|---|---|---|
| A |   | 10 | 5 | 10 |
| B | 12 |   | 6 | 10 |

(continued)

|  | A | B | C | D |
|---|---|---|---|---|
| C | 5 | 15 |  | 17 |
| D | 7 | 15 | 5 |  |
| Total | 24 | 40 | 16 | 37 |

Advantageously, the use of Measurement Reports ensures that 'real' measurement data from the actual operating network is used, in contrast to the known technique of using inaccurate prediction data. By ensuring that a statistically significant volume of Measurement Reports are used in the calculations, it is possible to guarantee that the resulting measures or calculations of unique cell coverage and cell overlap are extremely accurate. These values represent the cell coverage and overlap from the perspective of all the network subscriber units. Consequently, the impact on the network subscriber units, of decisions made using this data, can be accurately determined.

In accordance with the preferred embodiment of the present invention, the memory element 157 of the OMC 146 has also been adapted to include, for example, a look-up table of the coverage overlap information. In this regard, the look up table contains information relating to one or more of the following:

(i) Cell operational parameters,
(ii) Threshold values used in the respective cell(s),
(iii) Traffic profile information for that cell,
(iv) Received signal level information, say from a number of MSs, for that cell irrespective of whether the MSs are being currently served in that cell, or
(v) Transmitter power information, for either BTS and/or MS, relating to a particular cell.

Although the inventive concepts of the present invention have been described with regard to an implementation in an ONC 146, it is within the contemplation of the invention that the overlapping coverage calculation function 155 may be provided in a separate device or function, operably coupled to the OMC 146. Alternatively, the overlapping coverage calculation function 155 may be located within any other element within the infrastructure, such as MSCs 142, 144, or within BSCs 136, 138, 140 or even distributed within a number of elements, if appropriate. For example, the overlapping coverage calculation function 155 could be implemented within the radio access network (RAN) of the cellular infrastructure equipment and/or it may be implemented as a stand-alone element/funczion on an adjunct platform. Indeed, it is envisaged that the OMC as a logical entity could comprise several distributed or substantially co-located boxes with specific functions, including an optimisation (IOS) box.

In a preferred embodiment of the present invention, it is also envisaged that one or more BTSs 122-132 and/or one or more BSCs 136-140 may be adapted to regularly or intermittently collect the MR data. This information would then be forwarded to the OMC 146 (or indeed any other associated element) where the overlapping coverage area mapping/calculation function 155 resides.

More generally, an overlapping coverage calculation function 155 may be programmed into, say, the OMC 146 according to the preferred embodiment of the present invention, in any suitable manner. For example, new apparatus may be added to a conventional communication unit (for example OMC 146). Alternatively existing parts of a conventional communication unit may be adapted, for example, by reprogramming one or more processors therein. As such the required adaptation may be implemented in the form of processor-implementable instructions stored on a storage medium, such as a floppy disk, hard disk, programmable read only memory (PROM), random access memory (RAM) or any combination of these or other storage media.

Referring now to FIG. 2, a cell-based communication system 200, adapted to support the various inventive concepts of a preferred embodiment of the present invention, is illustrated. FIG. 2 is a representation of, say, a street level coverage map from Cells A 210, B 220, C 230, D 240, E 250, F 260 and X 270. As with a vast majority of cell-based wireless communication systems, there is significant degree of overlap between cell coverage areas. A key illustration in FIG. 2 is that although the coverage area of Cell X 270 is significant, most of its coverage could be supplemented by coverage from neighbouring cells 'A' to 'F' 210-260. The proportion of unique coverage that is solely supportable by cell X 270 is an island of coverage at the centre of cell X 270. Any subscriber units located in this region would definitely suffer a complete outage if Cell X 270 were to go out of service.

Although FIG. 2 illustrates the geographical coverage impact of such an outage, a key benefit of the present invention is to determine a number of Erlangs of traffic that would be lost due to the outage. For example, let us assume that only 10% of the cell's coverage area is uniquely served by this cell.

However, if all the subscriber units in the cell are concentrated in this one small central area, then the impact of a cell outage will be to remove service from 100% of the cell's traffic, not just 10% that relates to the geographical impact. Thus, it is the Erlang value related to impacted traffic that is preferably used in, for example:

(i) Prioritising a resulting outage alarm, and/or

(ii) Re-configuring a system's operational parameters.

In an enhanced embodiment of the present invention, the potential interference generated by cell X 270 on neighbouring cells 'A'-'F' 210-260, based on a level of overlap between the cells, may be used to determine whether to re-configure cell X's operational parameters. For example, the transmit power of cell X 270 may be reduced, or antenna down-tilting of Cell X's beam-forming antenna introduced.

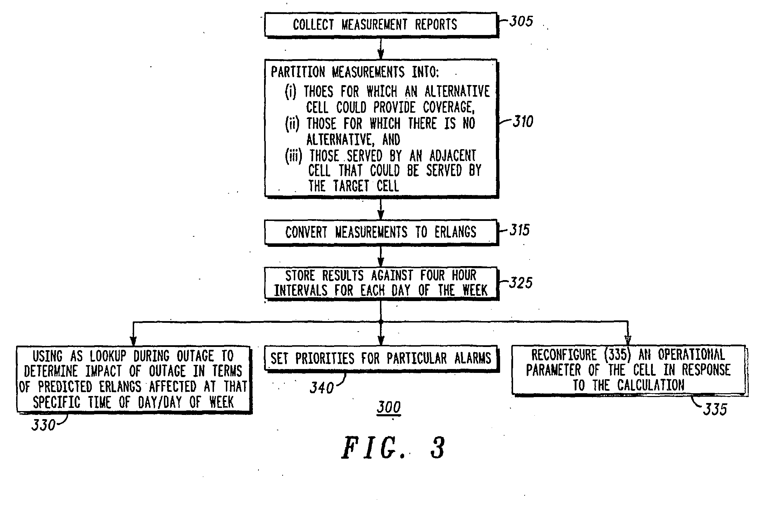

Referring now to FIG. 3, a flowchart 300 illustrates an overview of the preferred overlapping coverage measurement process. The flowchart commences with an OMC (or other box) collecting a series of Measurement Reports (MRs), for example resulting from a subscriber unit polling operation, as shown in step 305. MRs are collected from the target cell and from its neighbouring cells.

These MRs are then separated into, say, three categories, in step 310:

(i) Those MRs for which an alternative cell is identified as being able to provide coverage;

(ii) Those MRs for which there is no alternative coverage option, i.e. the subscriber unit generating the MR can only be served by that cell in that location; and

(iii) Those MRs collected from neighbouring cells that show a strong level of coverage from the target cell.

The OMC then converts the MR information into Erlangs, in step 315, to determine the traffic impact, rather than the geographical impact, of any potential cell outage. These results may then be stored, in step 325, according to the time of day, day of the week, month and any additional cell parameter information such as transmit power, and subscriber unit information such as cell location (say, from a GPS unit). In the illustrative step 325, the results are stored against four-hour intervals for each day of the week: however clearly the results may be stored using any storage/sorting method determined by a skilled person.

Thus, in this manner, an OMC determines how much traffic coverage is uniquely provided by a particular cell, for example, using existing measurement report data. Preferably, a statistically valid sample of MRs is used in the determination of overlapping and/or unique coverage. Once an Erlang figure has been determined, this figure is used to influence the Network Operator (or the OMC) to improve the network's performance.

For example, the figure is used to determine an appropriate cell outage strategy, in step 330. It is envisaged that such a use may entail determining when and how to maintain a cell, i.e. by turning the cell off. The traffic impact of such cell maintenance can therefore be minimised. Furthermore, the cell outage strategy may encompass the OMC using the Erlang value of uniquely covered traffic to select an alarm priority setting for the cell, as shown in step 340.

Advantageously, the unique coverage capability and coverage overlap information of the cell can also be used to automatically re-configure operational parameters in a cell, as shown in step 335. Such a re-configuration of operational parameters helps determine and implement a feasibility of beam-forming changes such as down-tilts, provision of additional redundancy, etc.

The inventive concepts of the present invention utilise dynamic monitoring and adaptation of a cell's operational parameters. Such information, when obtained extensively throughout the system, may be assessed to better plan and utilise available communication resources (frequencies) throughout the system. In this manner, it is envisaged that an automatic frequency planning operation may benefit from the inventive concepts described herein.

It is within the contemplation of the invention that the OMC 146 may use any additional indicia, such as traffic load, time of day, etc. to enhance the assessment of communications within the communication system. It is also envisaged that the OMC 146 (or other element) may poll BTSs or MSs within the system to obtain such additional indicia. Further variations that fall within the inventive concepts herein described will be apparent to a person skilled in the art.

The preferred embodiment of the present invention has been described with regard to a cellular telephony communication system, such as the global system for mobile communications (GSM). It is envisaged that the invention is equally applicable to other wireless communication systems, such as a universal mobile telecommunication system (UMTS), any code division multiple access (CDMA) or time division multiple access (TDMA) system, or an integrated digitally enhanced network (iDEN)™ as supplied by Motorola™. It is also within the contemplation of the invention that alternative radio communication architectures, such as private or public mobile radio communication systems could benefit from the inventive concepts described herein.

It will be understood that the communication system, communication unit, and improved method for coverage prediction, as described above, provides at least some of the following advantages that could not be reliably obtained using existing coverage prediction methods:

(-) Cells with high unique cell coverage are recognised as such, and may be managed more carefully. For example, a Network Operator may decide to introduce additional equipment redundancy into a particular system to minimise the risk of cell outage.

(ii) Cells with low unique cell coverage can be configured to receive less attention. In some cases, if capacity is not required, it may even be desirable to switch the cell off.

(iii) The aforementioned principles can be extended to encompass the level of unique coverage provided by a group of cells (e.g. a BSC area), or the level of unique coverage provided by a particular sublayer or frequency band (e.g. a Micro-cell layer, or a cellular 1800 MHz frequency band)

(iv) Cells that provide high levels of coverage overlap provide severe constraints on the development of a high quality and capacity frequency plan.

ConsequentJy, these cells can be examined to determine whether the cell's transmit power can be reduced, the antenna down-tilted, or the cell completely switched off.

Thus, a communication system, a communication unit, and a method for coverage prediction have been provided wherein the aforementioned disadvantages associated with prior art arrangements have been substantially alleviated.

## Claims

1. A method (300) of determining per-cell traffic coverage in a cellular communication system that comprises multiple cells, the method comprising the steps of:

   receiving measurements of one or more parameters relating to one or more operations of a first cell in a cellular communication system, wherein said one or more parameters includes information relating to whether a wireless subscriber communication unit can be served by a number of cells or uniquely served by the first cell; and calculating (310, 315) a degree of coverage overlap for said first cell based on a number of said measurements, the method being **characterised in that**:

   said measurements are partitioned (310) into one or more of at least three categories with respect to the first cell, wherein:

   (i) A first category is where the measurement indicates a wireless subscriber unit that is uniquely served by the first cell,
   (ii) A second category where the measurement indicates a wireless subscriber unit that can be served by a number of cells, and
   (iii) A third category where the measurement indicates a wireless subscriber unit that is served by a neighbouring cell but could be served by the first cell.

2. The method (300) of determining per-cell traffic coverage in a cellular communication system according to Claim 1, wherein the step of calculating (310, 315) a degree of coverage overlap based on a number of said measurements employs a statistically valid sample of said measurements.

3. The method (300) of determining per-cell traffic coverage in a cellular communication system according to any preceding Claim, wherein the step of calculating (310, 315) comprises determining an unique coverage factor (UCF) for that cell, where:

$$UCF = \frac{\text{Sum of MRs with no and/or weak neighbours}}{\text{Total Sum of MRs}}$$

4. The method (300) of determining per-cell traffic coverage in a cellular communication system according to any preceding Claim, the method further **characterised by** the step of:

   converting (315) a number of measurements to Erlangs to determine a coverage overlap based on subscriber traffic within said cell.

5. The method (300) of determining per-cell traffic coverage in a cellular communication system according to any preceding Claim, the method further **characterised by** the step of:

allocating a priority, for example an alarm priority, to said cell based on said calculation.

6. The method (300) of determining per-cell traffic coverage in a cellular communication system according to any preceding Claim, the method further **characterised by** the step of:

re-configuring (335) an operational parameter of said cell, for example a transmit power, a beam-forming antenna tilt or direction, or turning off a cell, in response to said calculation.

7. The method (300) of determining per-cell traffic coverage in a cellular communication system according to any preceding Claim, the method further **characterised by** the steps of:

storing said calculations; and
using (330) said stored calculation subsequently to determine a cell outage strategy.

8. The method (300) of determining per-cell traffic coverage in a cellular communication system according to any preceding Claim, wherein the steps of measuring and calculating are used in an automatic frequency planning operation of said cellular communication system.

9. The method (300) of determining per-cell traffic coverage in a cellular communication system according to any preceding Claim, wherein the wireless communication unit (146) receives measurement reports from a wireless serving communication unit, for example a base transceiver station (122-132), or a wireless subscriber communication unit (112-116).

10. A storage medium storing proccssor-implementable instructions for controlling a processor to carry out the method steps of any of claims 1 to 9.

11. A communication system (100) adapted to perform the steps of any of method Claims 1 to 9, the communication system (100) comprising an overlapping coverage calculation function (155).

12. A communication unit (146) for use in a cellular communication system that comprises multiple cells, the communication unit (146) comprising:

a receiving function for receiving measurements of one or more parameters relating to one or more operations of a first cell in said cellular communication system; and
a processor, operably coupled to said receiving function, to process said received data,

and arranged to calculate a degree of coverage overlap based on a number of said measurements,
the communication unit being **characterised in that**:

said processor is arranged to partition said received measurements into at least one of three categories with respect to the first cell, wherein:

(i) A first category indicates a wireless subscriber unit that is uniquely served by the first cell,
(ii) A second category where the measurement indicates a wireless subscriber unit that can be served by a number of cells, and
(iii) A third category where the measurement indicates a wireless subscriber unit that is served by a neighbouring cell but is located such that it could be served by the first cell.

13. The communication unit according to Claim 12, wherein said processor determines an unique coverage factor for a cell (UCF), where:

$$UCF = \frac{\text{Sum of MRs with no and/or weak neighbours}}{\text{Total Sum of MRs}}$$

14. The communication unit according to any of preceding Claims 12 and 13, wherein said processor converts a number of measurements to Erlangs to determine a coverage overlap based on subscriber traffic within said cell.

15. The communication unit according to Claim 14, wherein said processor allocates a priority, for example an alarm priority, to said cell based on said calculation.

16. The communication unit according to any of preceding Claims 12 to 15, wherein said communication unit or a unit operably coupled to the communication unit re-configures one or more operational parameters of said cell in response to said calculation.

17. The communication unit according to Claim 16, wherein said communication unit configures said cell for transmit power changes, beam-forming antenna changes, and/or switching off said cell site.

18. The communication unit according to any of preceding Claims 12 to 17, wherein said communication unit is an operations and management centre (146) configured to receive measurement report data relating to cells in said cellular communication system.

19. The communication unit according to any of preceding Claims 12 to 18, wherein said measured data includes one or more of the following:

(i) Cell statistical information, for example in the form of Congestion, Blocking, Mean-Hold Time (MHT), Handover (HO) Cause distribution information;
(ii) One or more Measurement Reports; or
(iii) Control Signalling behaviour.

20. The communication, unit according to any of preceding Claims 12 to 19, wherein said processor is operably coupled to a memory device for storing said calculations for subsequent use in determining a cell outage strategy.

21. The communication unit according to any of preceding Claims 12 to 20, wherein said communication unit is able to communicate on a GSM, GPRS, UMTS, iDEN, or CDMA cellular communication system.

**Patentansprüche**

1. Verfahren (300) zum Bestimmen einer pro Zellen-Verkehrsversorgung in einem zellularen Kommunikationssystem, das mehrere Zellen umfasst, wobei das Verfahren die folgenden Schritte umfasst:

Empfangen von Messungen von einem oder mehreren Parametern, die sich auf eine oder mehrere Operationen einer ersten Zelle in einem zellularen Kommunikationssystem beziehen, wobei der eine oder die mehreren Parameter Informationen umfassen, die sich darauf beziehen, ob eine drahtlose Teilnehmerkommunikationseinheit durch eine Zahl von Zellen oder nur durch die erste Zelle versorgt werden kann; und
Berechnen (310, 315) eines Grades an Versorgungsüberlappung für die erste Zelle basierend auf einer Zahl der Messungen, wobei das Verfahren **dadurch gekennzeichnet ist, dass**:

die Messungen in eine oder mehrere von mindestens drei Kategorien bezüglich der ersten Zelle unterteilt werden (310), wobei:

(i) Eine erste Kategorie ist, wo die Messung eine drahtlose Teilnehmereinheit anzeigt, die nur durch die erste Zelle versorgt wird,
(ii) Eine zweite Kategorie ist, wo die Messung eine drahtlose Teilnehmereinheit anzeigt, die durch eine Zahl von Zellen versorgt werden kann, und
(iii) Eine dritte Kategorie ist, wo die Messung eine drahtlose Teilnehmereinheit anzeigt, die durch eine benachbarte Zelle versorgt wird, aber durch die erste Zelle versorgt werden kann.

2. Verfahren (300) zum Bestimmen einer pro Zellen-Verkehrsversorgung in einem zellularen Kommunikationssystem gemäß Anspruch 1, wobei der Schritt eines Berechnens (310, 315) eines Grades an Versorgungsüberlappung basierend auf einer Zahl der Messungen einen statistisch gültigen Abtastwert der Messungen einsetzt.

3. Verfahren (300) zum Bestimmen einer pro Zellen-Verkehrsversorgung in einem zellularen Kommunikationssystem gemäß einem der vorangehenden Ansprüche, wobei der Schritt eines Berechnens (310, 315) ein Bestimmen eines eindeutigen Versorgungsfaktors (UCF) für diese Zelle umfasst, wobei gilt:

$$UCF = \frac{Summe\ von\ MRs\ mit\ keinen\ und\ /\ oder\ schwachen\ Nachbarn}{Gesamtsumme\ von\ MRs}$$

4. Verfahren (300) zum Bestimmen einer pro Zellen-Verkehrsversorgung in einem zellularen Kommunikationssystem gemäß einem der vorangehenden Ansprüche, wobei das Verfahren weiterhin durch den folgenden Schritt **gekennzeichnet** ist:

Wandeln (315) einer Zahl von Messungen in Erlangs, um eine Versorgungsüberlappung basierend auf einem Teilnehmerverkehr in der Zelle zu bestimmen.

5. Verfahren (300) zum Bestimmen einer pro Zellen-Verkehrsversorgung in einem zellularen Kommunikationssystem gemäß einem der vorangehenden Ansprüche, wobei das Verfahren weiterhin durch den folgenden Schritt **gekennzeichnet** ist:

Zuordnen einer Priorität, zum Beispiel einer Alarmpriorität, zu der Zelle, basierend auf der Berechnung.

6. Verfahren (300) zum Bestimmen einer pro Zellen-Verkehrsversorgung in einem zellularen Kommunikationssystem gemäß einem der vorangehenden Ansprüche, wobei das Verfahren weiterhin durch den folgenden Schritt **gekennzeichnet** ist:

Neukonfigurieren (335) eines Betriebsparameters der Zelle, zum Beispiel einer Übertragungsleistung, einer Neigung oder Richtung einer strahlenbündelbildenden Antenne, oder Ausschalten einer Zelle, in Reaktion auf die Berechnung.

7. Verfahren (300) zum Bestimmen einer pro Zellen-Verkehrsversorgung in einem zellularen Kommunikationssystem gemäß einem der vorangehenden Ansprüche, wobei das Verfahren weiterhin durch die folgenden Schritte **gekennzeichnet** ist:

Speichern der Berechnungen; und
danach Verwenden (330) der gespeicherten Berechnung, um eine Zellenausfallstrategie zu bestimmen.

8. Verfahren (300) zum Bestimmen einer pro Zellen-Verkehrsversorgung in einem zellularen Kommunikationssystem gemäß einem der vorangehenden Ansprüche, wobei die Schritte eines Messens und Berechnens in einem automatischen Frequenzplanungsbetrieb des zellularen Kommunikationssystems verwendet werden.

9. Verfahren (300) zum Bestimmen einer pro Zellen-Verkehrsversorgung in einem zellularen Kommunikationssystem gemäß einem der vorangehenden Ansprüche, wobei die drahtlose Kommunikationseinheit (146) Messberichte von einer drahtlosen versorgenden Kommunikationseinheit, zum Beispiel einer Basistransceiverstation (122-132), oder einer drahtlosen Teilnehmerkommunikationseinheit (112-116), empfängt.

10. Speichermedium, das prozessorimplementierbare Anweisungen zum Steuern eines Prozessors speichert, um die Verfahrensschritte einer der Ansprüche 1 bis 9 auszuführen.

11. Kommunikationssystem (100), das adaptiert ist, um die Schritte einer der Verfahrensansprüche 1 bis 9 durchzuführen, wobei das Kommunikationssystem (100) eine Überlappungsversorgungsberechnungsfunktion (155) umfasst.

12. Kommunikationseinheit (146) zur Verwendung in einem zellularen Kommunikationssystem, das mehrere Zellen umfasst, wobei die Kommunikationseinheit (146) umfasst:

eine Empfangsfunktion zum Empfangen von Messungen von einem oder mehreren Parametern, die sich auf eine oder mehrere Operationen einer ersten Zelle in dem zellularen Kommunikationssystem beziehen; und einen Prozessor, der betreibbar an die Empfangsfunktion gekoppelt ist, um die empfangenen Daten zu verarbeiten, und der angeordnet ist, um einen Grad an Versorgungsüberlappung basierend auf einer Zahl der Messungen zu berechnen, wobei die Kommunikationseinheit **dadurch gekennzeichnet ist, dass**:

der Prozessor angeordnet ist, um die empfangenen Messungen in mindestens eine von drei Kategorien bezüglich der ersten Zelle zu unterteilen, wobei:

(i) Eine erste Kategorie eine drahtlose Teilnehmereinheit anzeigt, die nur durch die erste Zelle versorgt wird,

(ii) Eine zweite Kategorie ist, wo die Messung eine drahtlose Teilnehmereinheit anzeigt, die durch eine Zahl von Zellen versorgt werden kann, und

(iii) Eine dritte Kategorie ist, wo die Messung eine drahtlose Teilnehmereinheit anzeigt, die durch eine benachbarte Zelle versorgt wird, aber durch die erste Zelle versorgt werden kann.

13. Kommunikationseinheit gemäß Anspruch 12, wobei der Prozessor einen eindeutigen Versorgungsfaktor (UCF) für eine Zelle bestimmt, wobei gilt:

$$UCF = \frac{Summe\ von\ MRs\ mit\ keinen\ und\ /\ oder\ schwachen\ Nachbarn}{Gesamtsumme\ von\ MRs}$$

14. Kommunikationseinheit gemäß einem der vorangehenden Ansprüche 12 und 13, wobei der Prozessor eine Zahl von Messungen in Erlangs wandelt, um eine Versorgungsüberlappung basierend auf einem Teilnehmerverkehr in der Zelle zu bestimmen.

15. Kommunikationseinheit gemäß Anspruch 14, wobei der Prozessor eine Priorität, zum Beispiel eine Alarmpriorität, der Zelle basierend auf der Berechnung zuordnet.

16. Kommunikationseinheit gemäß einem der vorangehenden Ansprüche 12 bis 15, wobei die Kommunikationseinheit, oder eine betreibbar an die Kommunikationseinheit gekoppelte Einheit, einen oder mehrere Betriebsparameter der Zelle in Reaktion auf die Berechnung neu konfigurieren.

17. Kommunikationseinheit gemäß Anspruch 16, wobei die Kommunikationseinheit die Zelle für Übertragungsleistungsänderungen, Änderungen strahlenbündelbildender Antennen und/oder ein Ausschalten der Zellenseite konfiguriert.

18. Kommunikationseinheit gemäß einem der vorangehenden Ansprüche 12 bis 17, wobei die Kommunikationseinheit ein Betriebs- und Wartungszentrum (146) ist, das konfiguriert ist, um Messberichtsdaten zu empfangen, die sich auf Zellen in dem zellularen Kommunikationssystem beziehen.

19. Kommunikationseinheit gemäß einem der vorangehenden Ansprüche 12 bis 18, wobei die gemessenen Daten umfassen:

(i) Zellenstatistische Informationen, zum Beispiel in der Form von Überlastungs-, Blockierungs-, mittlere Belegungsdauer (MHT)-, Handover (HO)-Grund-Verteilungsinformationen;

(ii) Einen oder mehrere Messberichte; und/oder

(iii) Steuersignalisierungsverhalten.

20. Kommunikationseinheit gemäß einem der vorangehenden Ansprüche 12 bis 19, wobei der Prozessor betreibbar an eine Speichervorrichtung zum Speichern der Berechnungen zur nachfolgenden Verwendung bei einem Bestimmen einer Zellenausfallstrategie gekoppelt ist.

21. Kommunikationseinheit gemäß einem der vorangehenden Ansprüche 12 bis 20, wobei die Kommunikationseinheit in der Lage ist, in einem zellularen GSM-, GPRS-, UMTS-, iDEN- oder CDMA-Kommunikationssystem zu kommunizieren.

**Revendications**

1. Procédé (300) de détermination d'une couverture de trafic par cellule dans un système de communication cellulaire qui comprend plusieurs cellules, le procédé comprenant les étapes consistant à :

   recevoir des mesures d'un ou plusieurs paramètres concernant une ou plusieurs opérations d'une première cellule dans un système de communication cellulaire, lesdits un ou plusieurs paramètres comprenant des informations sur le fait qu'une unité de communication d'abonné sans fil peut être desservie par un certain nombre des cellules ou être desservie uniquement par la première cellule ; et
   calculer (310, 315) un degré de chevauchement de couverture pour ladite première cellule en fonction d'un certain nombre desdites mesures, le procédé étant **caractérisé en ce que** :

   lesdites mesures sont réparties (310) en une ou plusieurs d'au moins trois catégories en ce qui concerne la première cellule, où

   (i) une première catégorie correspond au cas où la mesure indique une unité d'abonné sans fil qui est desservie uniquement par la première cellule,
   (ii) une deuxième catégorie correspond au cas où la mesure indique une unité d'abonné sans fil qui peut être desservie par un certain nombre de cellules, et
   (iii) une troisième catégorie correspond au cas où la mesure indique une unité d'abonné sans fil qui est desservie par une cellule voisine mais qui pourrait être desservie par la première cellule.

2. Procédé (300) de détermination d'une couverture de trafic par cellule dans un système de communication cellulaire selon la revendication 1, dans lequel l'étape de calcul (310, 315) d'un degré de chevauchement de couverture en fonction d'un certain nombre desdites mesures utilise un échantillon statistiquement valide desdites mesures.

3. Procédé (300) de détermination d'une couverture de trafic par cellule dans un système de communication cellulaire selon l'une quelconque des revendications précédentes, dans lequel l'étape de calcul (310, 315) comprend la détermination d'un facteur de couverture unique (UCF) pour cette cellule, où :

$$UCF = \frac{\text{Somme des MR sans voisin et/ou avec des voisins faibles}}{\text{Somme totale des MR}}$$

4. Procédé (300) de détermination d'une couverture de trafic par cellule dans un système de communication cellulaire selon l'une quelconque des revendications précédentes, le procédé étant, en outre, **caractérisé par** l'étape consistant à:

   convertir (315) un certain nombre des mesures en Erlangs pour déterminer un chevauchement de couverture en fonction du trafic d'abonnés dans ladite cellule.

5. Procédé (300) de détermination d'une couverture de trafic par cellule dans un système de communication cellulaire selon l'une quelconque des revendications précédentes, le procédé étant, en outre, **caractérisé par** l'étape consistant à :

   allouer une priorité, par exemple une priorité d'alarme, à ladite cellule en fonction dudit calcul.

6. Procédé (300) de détermination d'une couverture de trafic par cellule dans un système de communication cellulaire selon l'une quelconque des revendications précédentes, le procédé étant, en outre, **caractérisé par** l'étape consistant à :

   reconfigurer (335) un paramètre opérationnel de ladite cellule, par exemple une puissance de transmission, une inclinaison ou direction d'une antenne à formation de faisceau, ou l'arrêt d'une cellule, en réponse audit calcul.

7. Procédé (300) de détermination d'une couverture de trafic par cellule dans un système de communication cellulaire selon l'une quelconque des revendications précédentes, le procédé étant, en outre, **caractérisé par** les étapes consistant à :

stocker lesdits calculs ; et
utiliser (330) ultérieurement ledit calcul stocké pour déterminer une stratégie d'interruption de service d'une cellule.

**8.** Procédé (300) de détermination d'une couverture de trafic par cellule dans un système de communication cellulaire selon l'une quelconque des revendications précédentes, dans lequel les étapes de mesure et de calcul sont utilisées dans une opération de planification automatique de fréquences dudit système de communication cellulaire.

**9.** Procédé (300) de détermination d'une couverture de trafic par cellule dans un système de communication cellulaire selon l'une quelconque des revendications précédentes, dans lequel l'unité de communication sans fil (146) reçoit des rapports de mesure en provenance d'une unité de communication de desserte sans fil, par exemple une station émettrice-réceptrice de base (122 - 132), ou d'une unité de communication d'abonné sans fil (112 - 116).

**10.** Support de stockage stockant des instructions exécutables par un processeur pour commander un processeur afin d'exécuter les étapes de procédé selon l'une quelconque des revendications 1 à 9.

**11.** Système de communication (100) conçu pour exécuter les étapes selon l'une quelconque des revendications de procédé 1 à 9, le système de communication (100) comprenant une fonction de calcul de couverture en chevauchement (155).

**12.** Unité de communication (146) à utiliser dans un système de communication cellulaire qui comprend plusieurs cellules, l'unité de communication (146) comprenant :

une fonction de réception pour recevoir des mesures d'un ou plusieurs paramètres concernant une ou plusieurs opérations d'une première cellule dans ledit système de communication cellulaire ; et
un processeur, fonctionnellement couplé à ladite fonction de réception, pour traiter lesdites données reçues, et conçu pour calculer un degré de chevauchement de couverture en fonction d'un certain nombre desdites mesures, l'unité de communication étant **caractérisée en ce que** :

ledit processeur est conçu pour répartir lesdites mesures reçues en au moins l'une de trois catégories en ce qui concerne la première cellule, où:

(i) une première catégorie indique une unité d'abonné sans fil qui est desservie uniquement par la première cellule,
(ii) une deuxième catégorie dans laquelle la mesure indique une unité d'abonné sans fil qui peut être desservie par un certain nombre de cellules, et
(iii) une troisième catégorie dans laquelle la mesure indique une unité d'abonné sans fil qui est desservie par une cellule voisine mais qui pourrait être desservie par la première cellule.

**13.** Unité de communication selon la revendication 12, dans lequel ledit processeur détermine un facteur de couverture unique (UCF) pour une cellule, où :

$$UCF = \frac{\text{Somme des MR sans voisin et/ou avec des voisins faibles}}{\text{Somme totale des MR}}$$

**14.** Unité de communication selon l'une quelconque des revendications 12 et 13 précédentes, dans laquelle ledit processeur convertit un certain nombre des mesures en Erlangs pour déterminer un chevauchement de couverture en fonction du trafic d'abonnés dans ladite cellule.

**15.** Unité de communication selon la revendication 14, dans laquelle ledit processeur alloue une priorité, par exemple une priorité d'alarme, à ladite cellule en fonction dudit calcul.

**16.** Unité de communication selon l'une quelconque des revendications 12 à 15 précédentes, où ladite unité de communication ou une unité fonctionnellement couplée à l'unité de communication reconfigure un ou plusieurs paramètres opérationnels de ladite cellule en réponse audit calcul.

17. Unité de communication selon la revendication 16, où ladite unité de communication configure ladite cellule pour la transmission de changements de puissance, de changements d'antenne à formation de faisceau, et/ou d'arrêt du site de ladite cellule.

18. Unité de communication selon l'une quelconque des revendications 12 à 17 précédentes, où ladite unité de communication est un centre d'exploitation et de maintenance (146) configuré pour recevoir des données de rapports de mesures concernant des cellules dudit système de communication cellulaire.

19. Unité de communication selon l'une quelconque des revendications 12 à 18 précédentes, dans laquelle lesdites données de rapports de mesures comprennent une ou plusieurs des données suivantes :

(i) des informations statistiques de cellules, se présentant par exemple sous la forme d'informations de Congestion, de Blocage, de Temps d'Attente Moyen (MHT), de répartition de Causes de Transfert Intercellulaire (HO) ;
(ii) un ou plusieurs rapports de mesure ; ou
(iii) un comportement de signalisation de commande.

20. Unité de communication selon l'une quelconque des revendications 12 à 19 précédentes, dans laquelle ledit processeur est fonctionnellement couplé à un dispositif de mémoire pour le stockage desdits calculs pour une utilisation ultérieure pour déterminer une stratégie d'interruption de service d'une cellule.

21. Unité de communication selon l'une quelconque des revendications 12 à 20 précédentes, où ladite unité de communication est capable de communiquer sur un système de communication cellulaire GSM, GPRS, UMTS, iDEN ou CDMA.

FIG. 1

FIG. 2

```
                    ┌─────────────────────────────┐
                    │  COLLECT MEASUREMENT REPORTS │─305
                    └─────────────────────────────┘
                                  │
                                  ▼
      ┌──────────────────────────────────────────┐
      │ PARTITION MEASUREMENTS INTO:              │
      │  (i) THOES FOR WHICH AN ALTERNATIVE       │
      │      CELL COULD PROVIDE COVERAGE,         │
      │ (ii) THOSE FOR WHICH THERE IS NO          │─310
      │      ALTERNATIVE, AND                     │
      │(iii) THOSE SERVED BY AN ADJACENT          │
      │      CELL THAT COULD BE SERVED BY         │
      │      THE TARGET CELL                      │
      └──────────────────────────────────────────┘
                                  │
                                  ▼
            ┌─────────────────────────────────┐
            │  CONVERT MEASUREMENTS TO ERLANGS │─315
            └─────────────────────────────────┘
                                  │
                                  ▼
            ┌─────────────────────────────────┐
            │  STORE RESULTS AGAINST FOUR HOUR │
            │  INTERVALS FOR EACH DAY OF THE WEEK│─325
            └─────────────────────────────────┘
```

USING AS LOOKUP DURING OUTAGE TO DETERMINE IMPACT OF OUTAGE IN TERMS OF PREDICTED ERLANGS AFFECTED AT THAT SPECIFIC TIME OF DAY/DAY OF WEEK —330

SET PRIORITIES FOR PARTICULAR ALARMS —340

RECONFIGURE (335) AN OPERATIONAL PARAMETER OF THE CELL IN RESPONSE TO THE CALCULATION —335

300

## FIG. 3

**REFERENCES CITED IN THE DESCRIPTION**

**Patent documents cited in the description**

- EP 0431956 A
- GB 2356320 A